(19) Europäisches Patentamt
European Patent Office
Office européen des brevets

(11) **EP 1 680 311 B1**

(12) **EUROPÄISCHE PATENTSCHRIFT**

(45) Veröffentlichungstag und Bekanntmachung des Hinweises auf die Patenterteilung:
**23.04.2008 Patentblatt 2008/17**

(21) Anmeldenummer: **04790394.3**

(22) Anmeldetag: **14.10.2004**

(51) Int Cl.:
***B60R 21/0132*** *(2006.01)*

(86) Internationale Anmeldenummer:
**PCT/EP2004/011534**

(87) Internationale Veröffentlichungsnummer:
**WO 2005/035319 (21.04.2005 Gazette 2005/16)**

(54) **KRAFTFAHRZEUG MIT EINEM INSASSENSCHUTZSYSTEM**

MOTOR VEHICLE EQUIPPED WITH AN OCCUPANT PROTECTION SYSTEM

AUTOMOBILE MUNIE D'UN SYSTEME DE PROTECTION DES PASSAGERS

(84) Benannte Vertragsstaaten:
**AT BE BG CH CY CZ DE DK EE ES FI FR GB GR HU IE IT LI LU MC NL PL PT RO SE SI SK TR**

(30) Priorität: **17.10.2003 DE 10348997**
**17.10.2003 DE 10348998**
**17.10.2003 DE 10348999**
**31.01.2004 DE 102004004951**

(43) Veröffentlichungstag der Anmeldung:
**19.07.2006 Patentblatt 2006/29**

(73) Patentinhaber:
• **Volkswagen AG**
**38436 Wolfsburg (DE)**
• **AUDI AG**
**85045 Ingolstadt (DE)**
• **Andata Entwicklungstechnologie GmbH & Co. KG**
**5400 Hallein (AT)**

(72) Erfinder:
• **KUHN, Andreas**
**A-5440 Kochl (AT)**
• **PALAU MOTINO, Antoni**
**E-08033 Barcelona (ES)**
• **NEUBOHN, André**
**38440 Wolfsburg (DE)**
• **WEISS, Christian**
**85113 Böhmfeld (DE)**

(74) Vertreter: **Geske, Kerstin**
**Volkswagen AG,**
**Patentabteilung EZP,**
**Postfach 1770**
**38436 Wolfsburg (DE)**

(56) Entgegenhaltungen:
WO-A1-03/013911    DE-A- 10 016 142
DE-A- 10 040 111    DE-C- 10 103 661
US-A1- 2002 147 533    US-A1- 2002 188 393

EP 1 680 311 B1

## Beschreibung

Die Erfindung betrifft ein Kraftfahrzeug mit einem Insassenschutzsystem bzw. einer Insassenschutzeinrichtung wie einem Airbag.

Airbagsysteme sind z.B. in dem unter der Internetseite www.informatik.uni-dortmund.de/airbag/seminarphase/ hardware_vortrag.pdf veröffentlichten Artikel "Hardware und Mechanik realer Airbagsteuerungen" offenbart.

Die US 5 583 771, die US 5 684 701 und die US 6 532 508 B1 offenbaren die Ansteuerung eines Airbags mittels eines neuronalen Netzes in Abhängigkeit eines Ausgangssignals eines Beschleunigungssensors.

Die DE 198 54 380 A1 offenbart ein Verfahren zum Erkennen der Schwere eines Fahrzeugzusammenstosses, bei dem die Ausgangssignale einer Mehrzahl von Beschleunigungssensoren einem neuronalen Netz zugeführt werden. Bei dem Verfahren wird der Beginn der Auswertung der Ausgangssignale der Beschleunigungssensoren durch ein Triggersignal bestimmt, das von einem Beschleunigungssensor ausgegeben wird, wenn sein Ausgangssignal einen vorgegebenen Schwellwert überschreitet. Dieser Beschleunigungssensor veranlasst die anderen Beschleunigungssensoren, zu ein- und demselben Zeitpunkt das jeweilige Ausgangssignal zu liefern. Es wird weiterhin vorgeschlagen, die Ausgangssignale der Beschleunigungssensoren ein- oder zweimal zu integrieren.

Die DE 100 35 505 A1 offenbart ein Verfahren, bei dem mit Hilfe des neuronalen Netzes das Ausgangssignal eines Beschleunigungssensors in seinem zukünftigen zeitlichen Verlauf auf der Basis der Beschleunigungssensorsignale zu mindest einem definierten Zeitpunkt vorhergesagt wird.

Aus der DE 100 40 111 A1 ist ein Verfahren zur Bildung einer Auslöseentscheidung für Rückhaltemittel in einem Fahrzeug bekannt, bei dem aus Beschleunigungsmesswerten die Differenz gebildet und anschließend der Betrag der Differenz integriert wird. Das Integral wird mit mindestens einem Schwellwert verglichen. Überschreitet das Integral diesen Schwellwert bis zu einem vorgegebenen Zeitpunkt nicht, so wird die Lage einer Auslöseschwelle für die gemessene Beschleunigung oder für eine daraus abgeleitete Geschwindigkeitsänderung so verändert, dass die Auslöseempfindlichkeit geringer wird.

In der DE 101 03 661 C1 ist ein Verfahren zur Seitenaufprallsensierung in einem Kraftfahrzeug beschrieben, wobei auf der linken und auf der rechten Fahrzeugseite Beschleunigungssensoren angeordnet sind, aus deren Ausgangssignalen die Differenz gebildet wird. Das Differenzbeschleunigungssignal wird integriert oder aufsummiert. Zur Seitenaufprallsensierung wird das Differenzgeschwindigkeitssignal mit einer Schwelle verglichen, die in Abhängigkeit von dem Differenzbeschleunigungssignal gebildet wird.

Die US 2002/0147533 A1, die die Merkmale des Oberbegriffs der Ansprüche 1 und 15 zeigt, offenbart eine Vorrichtung zum Steuern eines Fahrzeuginsassenrückhaltesystems mit einem ersten Zusammenstossbeschleunigungsmesser bzw. -sensor, der eine Zusammenstossbeschleunigung misst und ein entsprechendes anzeigendes erstes Zusammenstossbeschleunigungssignal liefert, mit einem Mittel zum Bestimmen der Zusammenstossgeschwindigkeit aus dem ersten Zusammenstossbeschleunigungssignal, mit einem Mittel zum Bestimmen einer Zusammenstossverschiebung aus dem ersten Zusammenstossbeschleunigungssignal, mit einer Steuerung zum Vergleichen der Zusammenstossgeschwindigkeit als eine Funktion der Zusammenstossverschiebung mit entweder einem ausgewählten Unterscheidungsschwellenwert oder einem geschalteten Unterscheidungsschwellenwert, und mit einem zweiten Beschleunigungsmesser, der eine Zusammenstossquerbeschleunigung misst und ein entsprechendes Zusammenstossquerbeschleunigungssignal liefert, wobei die Steuerung Mittel zum Vergleichen eines Wertes umfasst, der in funktionaler Beziehung zur Zusammenstossquerbeschleunigung steht als eine Funktion bestimmter Zusammenstossverschiebungen, mit einem Querschwellenwert.

Es ist Aufgabe der Erfindung, ein in Bezug auf Insassenschutz verbessertes Kraftfahrzeug anzugeben.

Vorgenannte Aufgabe wird durch ein Kraftfahrzeug mit zumindest einem in einer Sicherheitszone des Kraftfahrzeuges angeordneten ersten Crashsensor zum Messen einer Bewegungsgröße des Kraftfahrzeuges und mit zumindest einem in einer Crashzone des Kraftfahrzeuges angeordneten zweiten Crashsensor zum Messen einer (weiteren) oder derselben Bewegungsgröße des Kraftfahrzeuges gelöst, wobei das Kraftfahrzeug eine mittels eines Zündsignals steuerbare Insassenschutzeinrichtung und ein Steuergerät zur Ermittlung des Zündsignals in Abhängigkeit der gemessenen Bewegungsgrößen und/oder je eines zeitlichen Mittelwertes der gemessenen Bewegungsgrößen über zumindest ein erstes Zeitintervall umfasst; und wobei das Steuergerät

- zumindest einen ersten Auslösezusammenhang zur Ermittlung des Zündsignals in Abhängigkeit der gemessenen Bewegungsgrößen und/oder je eines zeitlichen Mittelwertes der gemessenen Bewegungsgrößen über das zumindest erste Zeitintervall und
- zumindest einen zweiten Auslösezusammenhang zur Ermittlung des Zündsignals in Abhängigkeit der mittels des ersten Crashsensors gemessenen Bewegungsgröße und/oder deren zeitlichen Mittelwertes über das zumindest erste Zeitintervall nicht jedoch in Abhängigkeit der mittels des zweiten Crashsensors gemessenen Bewegungsgröße und/oder deren zeitlichen Mittelwertes über das zumindest erste Zeitintervall

umfasst.

Eine Crashzone des Kraftfahrzeuges im Sinne der Erfindung ist insbesondere ein Bereich des Kraftfahrzeuges, der bei einer Kollision des Kraftfahrzeuges mit einem Hindernis vor einem (Soll-)Auslösezeitpunkt der Insassenschutzeinrichtung zerstört werden kann. Eine Sicherheitszone des Kraftfahrzeuges im Sinne der Erfindung ist insbesondere ein Bereich des Kraftfahrzeuges, der bei einer Kollision des Kraftfahrzeuges mit einem Hindernis nicht oder nach einem (Soll-)Auslösezeitpunkt der Insassenschutzeinrichtung zerstört wird.

Eine Insassenschutzeinrichtung im Sinne der Erfindung ist insbesondere ein Airbag und/oder ein Gurtstraffer. Eine Bewegungsgröße des Kraftfahrzeuges im Sinne der Erfindung kann eine Beschleunigung, eine Geschwindigkeit oder ein Weg bzw. eine von diesen Größen abgeleitete Größe sein.

Ein Crashsensor im Sinne der Erfindung kann ein Beschleunigungssensor zum Messen einer Beschleunigung in eine oder mehrere Richtungen sein. Ein Crashsensor im Sinne der Erfindung kann auch ein Radargerät, eine Infrarotanordnung oder eine Kamera sein. In diesem Fall kann eine Bewegungsgröße des Kraftfahrzeuges ein Abstand des Kraftfahrzeuges zu einem Hindernis, die erste oder zweite Ableitung dieses Abstandes oder eine andere äquivalente Größe sein. Ein Crashsensor im Sinne der Erfindung kann auch ein Sensor zur Messung einer Deformation des Kraftfahrzeuges sein. Ein solcher Sensor kann ein faseroptischer Sensor oder ein in der DE 100 16 142 A1 offenbarter Sensor sein. In diesem Falle kann eine Bewegungsgröße des Kraftfahrzeuges eine Deformation des Kraftfahrzeuges, die erste oder zweite Ableitung dieser Deformation oder eine andere äquivalente Größe sein.

Ein zeitlicher Mittelwert im Sinne der Erfindung kann ein arithmetischer Mittelwert oder ein gewichteter Mittelwert sein. Bei einem derartigen gewichteten Mittelwert können z.B. jüngere Werte der Bewegungsgröße in dem betreffenden Zeitintervall stärker gewichtet werden als ältere Werte der Bewegungsgröße in dem betreffenden Zeitintervall. Ein Mittelwert im Sinne der Erfindung kann auch ein einem Mittelwert proportionaler Wert sein. In vorteilhafter Ausgestaltung der Erfindung ist der Mittelwert ein dem arithmetischen Mittelwert proportionaler Wert. Dabei ist der Mittelwert vorteilhafterweise ein dem Integral der Bewegungsgröße in dem betreffenden Zeitintervall bzw. der Summe von Abtastwerten der Bewegungsgröße in dem betreffenden Zeitintervall proportionaler Wert.

Ein Zündsignal im Sinne der Erfindung kann ein binäres Signal sein, das angibt, ob eine Insassenschutzeinrichtung, wie ein Airbag und/oder ein Gurtstraffer, ausgelöst werden soll. Ein solches Zündsignal im Sinne der Erfindung kann ein in der DE 100 35 505 A1 beschriebenes "FIRE/NO-FIRE"-Signal sein. Ein Zündsignal im Sinne der Erfindung kann auch ein komplexeres Signal sein, das angibt, in welchem Ausmaß (z.B. Stufe 1 oder Stufe 2) ein Airbag gezündet werden soll. Ein solches Zündsignal im Sinne der Erfindung kann zudem ein in der DE 100 35 505 A1 beschriebener Crashschwerepararrieter bzw. eine Insassenbeschleunigung bzw. -belastung sein. Ein Zündsignal im Sinne der Erfindung kann eine den Ort und/oder die Richtung eines Zusammenstoßes angebende Information sein oder umfassen.

In vorteilhafter Ausgestaltung der Erfindung sind der erste Crashsensor und der zweite Crashsensor zumindest 0,5 m voneinander entfernt angeordnet. In weiterhin vorteilhafter Ausgestaltung der Erfindung ist der erste Crashsensor mit dem Steuergerät verbunden, in das Steuergerät integriert oder mit dem Steuergerät in einem Gehäuse angeordnet.

In weiterhin vorteilhafter Ausgestaltung der Erfindung umfasst das Steuergerät ein Auswahlmodul zur Auswahl des ersten Auslösezusammenhanges oder des zweiten Auslösezusammenhanges zur aktuellen Ermittlung des Zündsignals, wobei die Auswahl zwischen dem zweiten Auslösezusammenhang und dem ersten Auslösezusammenhang insbesondere in Abhängigkeit der mittels des zweiten Crashsensors gemessenen Bewegungsgröße und/oder deren zeitlichen Mittelwert über das zumindest erste Zeitintervall erfolgt.

In weiterhin vorteilhafter Ausgestaltung der Erfindung ist das Zündsignal zudem in Abhängigkeit eines zeitlichen Mittelwertes der mittels des ersten Crashsensors gemessenen Bewegungsgröße über ein zweites, von dem ersten Zeitintervall verschiedenes, Zeitintervall ermittelbar. Ein zweites, von einem ersten Zeitintervall verschiedenes, Zeitintervall im Sinne der Erfindung kann sich von dem ersten Zeitintervall in seiner Länge und/oder seiner Lage unterscheiden.

In weiterhin vorteilhafter Ausgestaltung der Erfindung ist das erste Zeitintervall und/oder das zweite Zeitintervall zwischen 1 ms und 200 ms, insbesondere zwischen 4 ms und 32 ms, vorteilhafterweise zwischen 8 ms und 24 ms, lang.

In weiterhin vorteilhafter Ausgestaltung der Erfindung sind das erste Zeitintervall und/oder das zweite Zeitintervall zwischen 1 ms und-50 ms, Vorteilhafterweise 2 ms und 16 ms, voneinander versetzt.

Vorgenannte Aufgabe wird zudem durch ein Verfahren zum Herstellen eines - insbesondere eines oder mehrere der vorgenannten Merkmale umfassenden - Kraftfahrzeuges gelöst, wobei zumindest ein erster Crashsensor zum Messen einer Bewegungsgröße des Kraftfahrzeuges in einer Sicherheitszone des Kraftfahrzeuges angeordnet wird, wobei zumindest ein zweiter Crashsensor zum Messen einer Bewegungsgröße des Kraftfahrzeuges in einer Crashzone des Kraftfahrzeuges angeordnet wird, und wobei eine mittels eines Zündsignals steuerbare Insassenschutzeinrichtung und ein Steuergerät zur Ermittlung des Zündsignals in Abhängigkeit der gemessenen Bewegungsgrößen und/oder je eines zeitlichen Mittelwertes der gemessenen Bewegungsgrößen über zumindest ein erstes Zeitintervall in dem Kraftfahrzeug angeordnet werden.

In vorteilhafter Ausgestaltung der Erfindung wird

-     zumindest ein erster Auslösezusammenhang zur Ermittlung des Zündsignals in Abhängigkeit der gemessenen Bewegungsgrößen und/oder je eines zeitlichen Mittelwertes der gemessenen Bewegungsgrößen über das zumindest erste Zeitintervall erzeugt (und insbesondere in dem Steuergerät implementiert) und/oder

- zumindest ein zweiter Auslösezusammenhang zur Ermittlung des Zündsignals in Abhängigkeit der mittels des ersten Crashsensors gemessenen Bewegungsgröße und/oder deren zeitlichen Mittelwertes über das zumindest erste Zeitintervall nicht jedoch in Abhängigkeit der mittels des zweiten Crashsensors gemessenen Bewegungsgröße und/oder deren zeitlichen Mittelwertes über das zumindest erste Zeitintervall erzeugt (und insbesondere in dem Steuergerät implementiert).

In weiterhin vorteilhafter Ausgestaltung der Erfindung wird der erste Auslösezusammenhang und/oder der zweite Auslösezusammenhang als eine Mehrzahl von Vergleichen der Bewegungsgrößen und/oder deren zeitlicher Mittelwerte über das zumindest erste Zeitintervall und/oder über zumindest das erste Zeitintervall und ein zweites, von dem ersten Zeitintervall verschiedenes, Zeitintervall mit einer Mehrzahl von Grenzwerten (insbesondere automatisch) erzeugt.

In weiterhin vorteilhafter Ausgestaltung der Erfindung werden die Grenzwerte automatisch ermittelt, wird die Anzahl der Vergleiche automatisch festgelegt, wird die Reihenfolge der Vergleiche automatisch ausgewählt, wird eine gemessene Bewegungsgröße und/oder deren zeitlicher Mittelwerte über das zumindest erste Zeitintervall und/oder über das zumindest erste Zeitintervall und das zweite Zeitintervall für einen Vergleich automatisch ausgewählt und/oder wird das Alter der Bewegungsgrößen und/oder der zeitlichen Mittelwerte über das zumindest erste Zeitintervall und/oder über das zumindest erste Zeitintervall und das zweite Zeitintervall für die Vergleiche automatisch ausgewählt.

In weiterhin vorteilhafter Ausgestaltung der Erfindung wird der erste Auslösezusammenhang und/oder der zweite Auslösezusammenhang in Abhängigkeit der gemessenen Bewegungsgröße oder deren zeitlicher Mittelwert über das zumindest erste Zeitintervall und/oder über zumindest das erste Zeitintervall und das zweite Zeitintervall einer Situation erzeugt, für die ein Soll-Auslösezeitpunkt der Insassenschutzeinrichtung bekannt ist, wobei jedoch die gemessene Bewegungsgröße oder deren zeitlicher Mittelwert über das zumindest erste Zeitintervall und/oder über zumindest das erste Zeitintervall und das zweite Zeitintervall in einem Trainingsunterdrückungs-Zeitenrall vor dem Soll-Auslösezeitpunkt der Insassenschutzeinrichtung, um den Soll-Auslösezeitpunkt der Insassenschutzeinrichtung herum oder nach dem Soll-Auslösezeitpunkt der Insassenschutzeinrichtung bei der Erzeugung des ersten Auslösezusammenhanges und/oder des zweiten Auslösezusammenhanges unberücksichtigt bleibt.

In weiterhin vorteilhafter Ausgestaltung der Erfindung bleibt die gemessene Bewegungsgröße und/oder deren zeitlicher Mittelwert über das zumindest erste Zeitintervall und/oder über das zumindest erste Zeitintervall und das zweite Zeitintervall in einem Trainingsunterdrückungs-Zeitintervall vor dem Soll-Auslösezeitpunkt der Insassenschutzeinrichtung bei der Erzeugung des ersten Auslösezusammenhanges und/oder des zweiten Auslösezusammenhanges unberücksichtigt.

In weiterhin vorteilhafter Ausgestaltung der Erfindung ist das Trainingsunterdrückungs-Zeitintervall zwischen 1 ms und 40 ms, insbesondere zwischen 2 ms und 10 ms, vorteilhafterweise in etwa 5 ms, lang.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen, wobei gleiche Bezugszeichen gleiche oder gleichartige Gegenstände bezeichnen. Dabei zeigen:

Fig. 1     eine Draufsicht auf ein Kraftfahrzeug,
Fig. 2     ein Ausführungsbeispiel für ein Insassenschutzsystem,
Fig. 3     ein Ausführungsbeispiel eines Steuerungsmoduls,
Fig. 4     ein Ausführungsbeispiel eines Auslösemoduls,
Fig. 5     ein Ausführungsbeispiel eines Ausgangssignals eines Crashsensors,
Fig. 6     das Integral des Ausgangssignals gemäß Fig. 5 in einem Zeitintervall,
Fig. 7     ein Ausführungsbeispiel einer Auslöseerzeugung,
Fig. 8     ein Ausführungsbeispiel eines neuronalen Netzes,
Fig. 9     ein Ausführungsbeispiel eines Entscheidungsbaumes,
Fig. 10    ein Ausführungsbeispiel eines Verfahrens zum Herstellen eines Kraftfahrzeuges,
Fig. 11    das Integral gemäß Fig. 6 mit einem Trainingsunterdrückungs-Zeitintervall,
Fig. 12    einen Ausschnitt des Integrals gemäß Fig. 11,
Fig. 13    eine Auslöseinformation mit einem Trainingsunterdrückungs-Zeitintervall,
Fig. 14    einen Ausschnitt des Integrals gemäß Fig. 6,
Fig. 15    eine weitere Auslöseinformation mit einem Trainingsunterdrückungs-Zeitintervall,
Fig. 16    ein weiteres Ausführungsbeispiel eines Auslösemoduls,
Fig. 17    ein weiteres Ausführungsbeispiel eines Auslösemoduls und

Fig. 18     ein weiteres Ausführungsbeispiel eines Auslösemoduls.

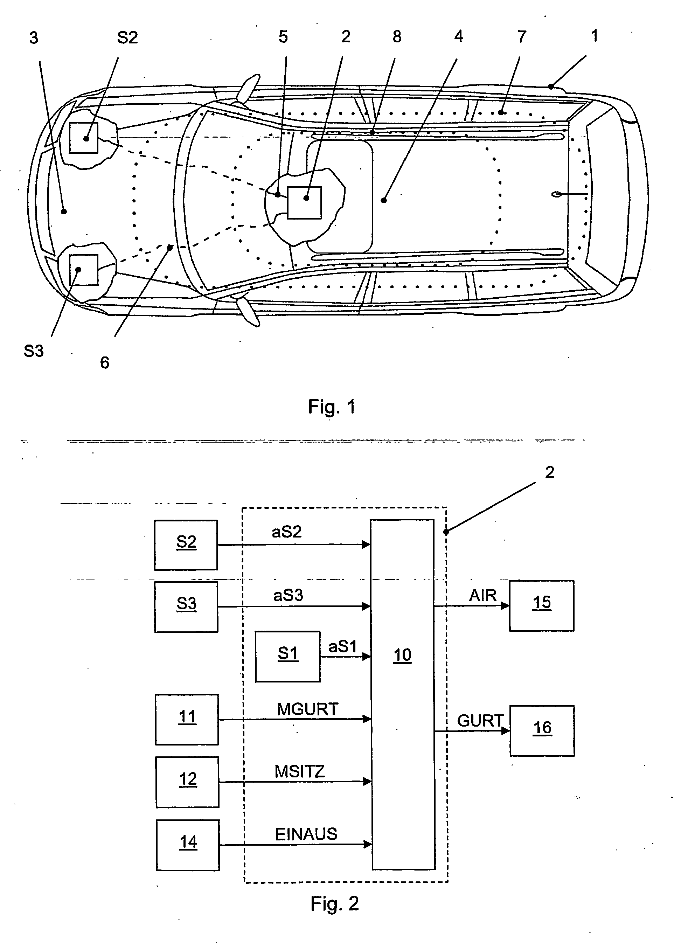

Fig. 1 zeigt eine Draufsicht auf ein Kraftfahrzeug 1 mit einem - in Fig. 2 in Form eines Blockschaltbildes dargestellten - Insassenschutzsystem. Das Insassenschutzsystem umfasst zumindest einen - nicht in Fig. 1 jedoch in Fig. 2 dargestellten - Airbag 15 und/oder einen - nicht in Fig. 1 jedoch in Fig. 2 dargestellten - Gurtstraffer 16. Das Insassenschutzsystem umfasst zudem ein Steuergerät 2 zum Auslösen des Airbags 15 und/oder des Gurtstraffers 16 sowie einen in die rechte vordere Seite des Kraftfahrzeuges 1 integrierten Crashsensor S2 und einen in die linke vordere Seite des Kraftfahrzeuges 1 integrierten Crashsensor S3. Die Crashsensoren S2 und S3 sind mit dem Steuergerät 2 durch Zuleitungen 5 und 6 verbunden.

Die Crashsensoren S2 und S3 sowie ein weiterer - wie in Fig. 2 dargestellt in das Steuergerät 2 integrierter- Crashsensor S1 sind gemäß dem vorliegenden Ausführungsbeispiel als Beschleunigungssensoren ausgebildet. Geeignete Beschleunigungssensoren sind z.B. in dem unter der Internetseite www.informatik.uni-dortmund.de/airbag/seminarphase/hardware_vortrag.pdf veröffentlichten Artikel "Hardware und Mechanik realer Airbagsteuerungen", Kapitel 3.2 Beschleunigungssensor offenbart. Geeignete Beschleunigungssensoren sind z.B. Bosch SMB060, Bosch PAS3 oder Bosch UPF1. Ein geeigneter Beschleunigungssensor kann z.B. einen Bessel-Tiefpassfilter mit einer Grenzfrequenz von z.B. 400 Hz umfassen. Die Crashsensoren S1, S2 und S3 liefern als Ausgangssignale Beschleunigungswerte aS1, aS2 bzw. aS3.

Die Crashsensoren S2 und S3 sind in einer Crashzone 3 angeordnet, die durch die Außenkonturen des Kraftfahrzeuges 1 und eine mit Bezugszeichen 7 bezeichnete gepunktete Linie begrenzt ist. Die Crashzone 3 definiert dabei einen Bereich des Kraftfahrzeuges 1, der bei einer Kollision des Kraftfahrzeuges 1 mit einem Hindernis vor einem Auslösezeitpunkt des Airbags 15 und/oder des Gurtstraffers 16 zerstört werden kann. Das Steuergerät 2 ist mit dem Crashsensor S1 in einer Sicherheitszone 4 angeordnet, die durch eine mit Bezugszeichen 8 bezeichnete gepunktete Linie begrenzt ist. Die Sicherheitszone 4 definiert dabei einen Bereich des Kraftfahrzeuges, der bei einer Kollision des Kraftfahrzeuges 1 mit einem Hindernis nicht oder erst nach einem Auslösezeitpunkt des Airbags 15 und/oder des Gurtstraffers 16 zerstört wird. Kollision des Kraftfahrzeuges 1 mit einem Hindernis ist im Sinne der Erfindung insbesondere eine derartige Kollision, vor deren Folgen eine Insassenschutzeinrichtung, wie der Airbag 15 bzw. der Gurtstraffer 16 den oder die Insassen des Kraftfahrzeuges 1 schützen soll. Im beschriebenen Ausführungsbeispiel ist eine derartige Kollision eine Kollision mit einer Frontalkomponente.

Die tatsächliche Crashzone 3 bzw. die tatsächliche Sicherheitszone 4 gemäß vorgenannter Definition richtet sich nach der individuellen Ausgestaltung des betrachteten Kraftfahrzeuges. Daher können die Crashzone 3 bzw. die Sicherheitszone 4 des Kraftfahrzeuges 1 keine allgemeingültige Beschreibung der Lage von Crashzonen und Sicherheitszonen im Sinne vorgenannter Definition angeben. Die Lage der Crashzone 3 bzw. der Sicherheitszone 4 in Fig. 1 dient einzig und allein der Erläuterung der Erfindung.

Das Insassenschutzsystem umfasst weiterhin einen Gurtsensor 11 zum Erkennen, ob ein Sicherheitsgut angelegt ist, und zur Ausgabe einer entsprechenden Gurtinformation MGURT. Das Insassenschutzsystem umfasst weiterhin einen Sitzbelegungssensor 12 zum Erkennen, ob bzw. wie ein Sitz belegt ist, und zur Ausgabe einer entsprechenden Sitzbelegungsinformation MSITZ. Ein geeigneter Sitzbelegungssensor ist z.B. ein in den Sitz integrierter Drucksensor. Geeignet ist auch eine in dem unter der Internetseite www.informatik.uni-dortmund.de/airbag/seminarphase/hardware_vortrag:pdf veröffentlichten Artikel "Hardware und Mechanik realer Airbagsteuerungen", Kapitel 3.3 ‚Innenraum Sensierung' offenbarte Infrarotabtastung. Mittels Infrarotabtastung und Fuzzy Logic lässt sich dabei nicht nur erkennen, ob ein Sitz belegt ist, sondern auch, ob es sich dabei um einen Gegenstand wie eine Tasche handelt oder um einen Menschen. Dazu sendet eine Zeile von z.B. acht oder mehr Leuchtdioden oberhalb des Sitzes Infrarotlicht aus und eine CCD-Matrix aus 64 Bildpunkten nimmt die so beleuchtete Szene auf. Diese charged coupled devices, kurz CCD, bestehen aus Photodioden und Verstärkerelementen in Matrixanordnungen. Einfallendes Licht setzt dabei jeweils Ladungsträger frei. Ein so erzeugtes Signal wird verstärkt und verarbeitet beziehungsweise gespeichert. Dieser Vorgang wird unter verschiedenen Winkeln wiederholt und so der Sitz abgetastet. Algorithmen der Bildverarbeitung und der Fuzzy Logic erkennen aus diesen Signalen Konturen von Objekten und Menschen.

Es kann weiterhin vorgesehen sein, dass das Insassenschutzsystem ein Bedienelement 14 zur Aktivierung bzw. Deaktivierung des Airbags 15 umfasst. Ein entsprechendes Schaltsignal ist mit Bezugszeichen EINAUS bezeichnet.

Das Steuergerät 2 umfasst ein Steuerungsmodul 10 zur Berechnung und Ausgabe eines Zündsignals AIR für den Airbag 15 und/oder eines Zündsignals GURT für den Gurtstraffer 16 in Abhängigkeit der Beschleunigungswerte aS1, aS2 bzw. aS3, der Gurtinformation MGURT, der Sitzbelegungsinformation MSITZ und/oder des Schaltsignals EINAUS.

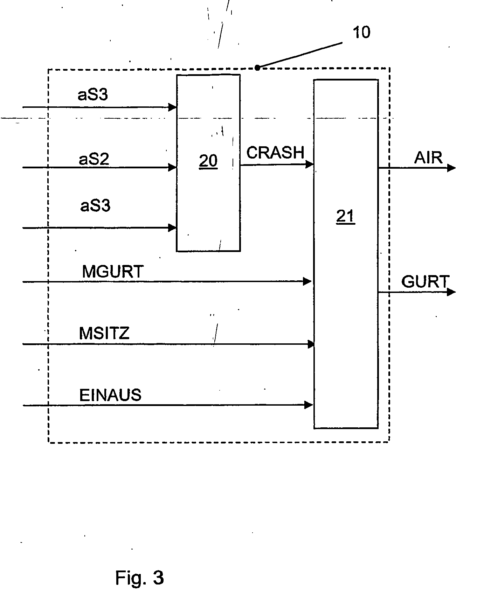

Fig. 3 zeigt das Steuerungsmodul 10 in einer beispielhaften Ausgestaltung. Das Steuerungsmodul 10 umfasst ein Auslösemodul 20 zur Berechnung und Ausgabe eines Zündvorschlags CRASH in Abhängigkeit der Beschleunigungswerte aS1, aS2 bzw. aS3. Das Steuerungsmodul 10 umfasst zudem eine Feuertabelle 21 zur Berechnung und Ausgabe des Zündsignals AIR für den Airbag 15 und/oder des Zündsignals GURT für den Gurtstraffer 16 in Abhängigkeit des Zündvorschlags CRASH, der Gurtinformation MGURT, der Sitzbelegungsinformation MSITZ und/oder des Schaltsignals EINAUS. So kann z.B. vorgesehen werden, dass das Zündsignal AIR nur dann gleich dem Zündvorschlag CRASH ist, wenn ein entsprechender Sitz mit einer Person einer gewissen Größe belegt ist, und dass das Zündsignal AIR andernfalls gleich 0 ist.

Sowohl der Zündvorschlag CRASH als auch die Zündsignale AIR und GURT können Zündsignale im Sinne der Ansprüche sein. Sowohl der Zündvorschlag CRASH als auch die Zündsignale AIR und GURT können ein -z.B. dem in der DE 100 35 505 A1 beschriebenen "FIRE/NO-FIRE"-Signal entsprechendes - binäres Signal sein, das angibt, ob eine Insassenschutzeinrichtung, wie ein Airbag und/oder ein Gurtstraffer, ausgelöst werden soll. Sowohl der Zündvorschlag CRASH als auch die Zündsignale AIR und GURT können auch ein komplexeres Signal sein. Sowohl der Zündvorschlag CRASH als auch das Zündsignal AIR können z.B. ein komplexeres Signal sein, das angibt, in welchem Ausmaß (z.B. Stufe 1 oder Stufe 2) der Airbag 15 gezündet werden soll. Sowohl der Zündvorschlag CRASH als auch das Zündsignal AIR können z.B. zudem ein in der DE 100 35 505 A1 beschriebener Crashschwereparameter bzw. eine Insassenbeschleunigung bzw. -belastung umfassen. Es kann vorgesehen sein, dass sowohl der Zündvorschlag CRASH als auch die Zündsignale AIR und GURT den Ort und/oder die Richtung eines Zusammenstoßes angeben können.

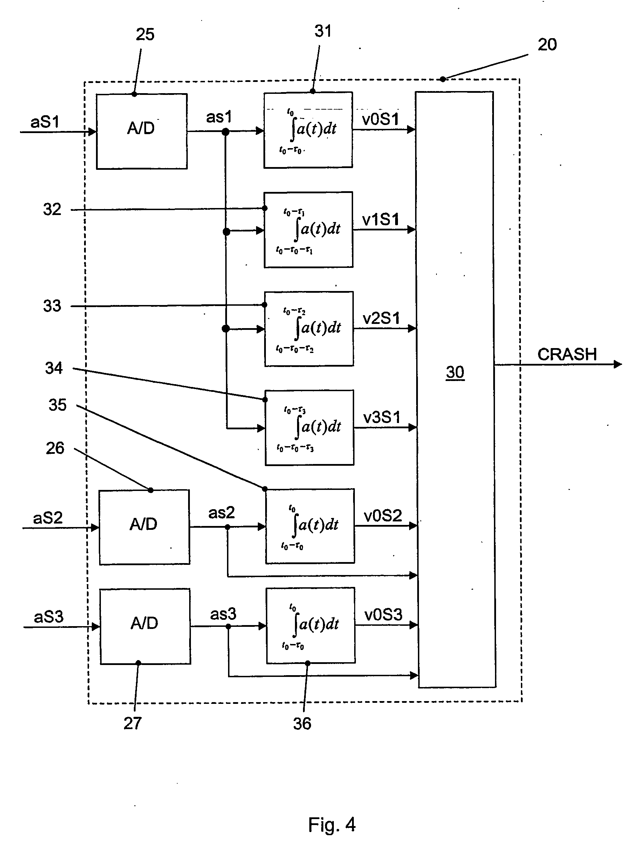

Fig. 4 zeigt das Auslösemodul 20 in einer beispielhaften Ausgestaltung. Das Auslösemodul 20 umfasst einen A/D-Wandler 25 (analog/digtal-Wandler) zum Abtasten des Beschleunigungswertes aS1 und zur Ausgabe eines abgetasteten Beschleunigungswertes as1, einen A/D-Wandler 26 zum Abtasten des Beschleunigungswertes aS2 und zur Ausgabe eines abgetasteten Beschleunigungswertes as2 und einen A/D-Wandler 27 zum Abtasten des Beschleunigungswertes aS3 und zur Ausgabe eines abgetasteten Beschleunigungswertes as3. Die Abtastfrequenz der $\Delta t$ der A/D-Wandler 25, 26 und 27 kann z.B. 4 kHz betragen. Das Auslösemodul 20 umfasst zudem (digitale) Integratoren 31, 32, 33, 34, 35 und 36.

Mittels des Integrators 31 wird ein Pseudogeschwindigkeitswert v0S1 zu einem Zeitpunkt to gemäß

$$v0S1 = \int\limits_{t_0-\tau_0}^{t_0} as1 \cdot dt$$

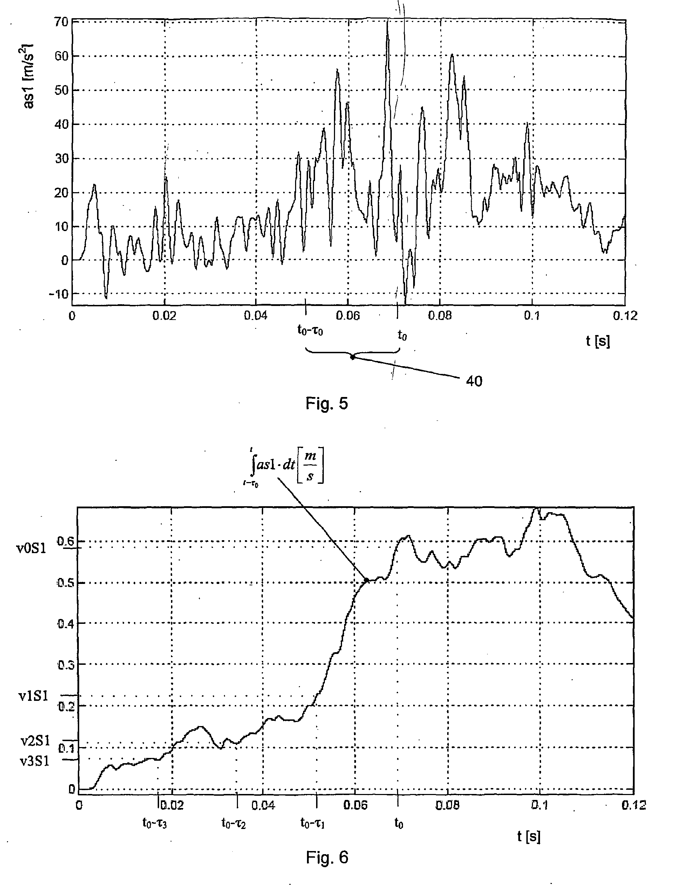

ermittelt, wobei $\tau_0$ die Länge eines Zeitintervalls $[t_0-\tau_0, t_0]$ bzw. 40 (vgl. Fig. 5) ist. Der Zeitpunkt $t_0$ bezeichnet den aktuellen Zeitpunkt, also den aktuellen Wert der Zeit t.

Mittels des Integrators 32 wird ein Pseudogeschwindigkeitswert v1S1 zu einem Zeitpunkt $t_0-\tau_1$ gemäß

$$v1S1 = \int\limits_{t_0-\tau_0-\tau_1}^{t_0-\tau_1} as1 \cdot dt$$

ermittelt.

Mittels des Integrators 33 wird ein Pseudogeschwindigkeitswert v2S1 zu einem Zeitpunkt $t_0-\tau_2$ gemäß

$$v2S1 = \int\limits_{t_0-\tau_0-\tau_2}^{t_0-\tau_2} as1 \cdot dt$$

ermittelt.

Mittels des Integrators 34 wird ein Pseudogeschwindigkeitswert v3S1 zu einem Zeitpunkt $t_0-\tau_3$ gemäß

$$v3S1 = \int\limits_{t_0-\tau_0-\tau_3}^{t_0-\tau_3} as1 \cdot dt$$

ermittelt.

Mittels des Integrators 35 wird ein Pseudogeschwindigkeitswert v0S2 zum Zeitpunkt $t_0$ gemäß

$$v0S2 = \int_{t_0 - \tau_0}^{t_0} as2 \cdot dt$$

ermittelt.

Mittels des Integrators 36 wird ein Pseudogeschwindigkeitswert v0S3 zum Zeitpunkt $t_0$ gemäß

$$v0S3 = \int_{t_0 - \tau_0}^{t_0} as3 \cdot dt$$

ermittelt.

Die Wirkung der Integratoren 31, 32, 33, 34, 35 und 36 verdeutlichen Fig. 5 und Fig. 6. Dabei zeigt Fig. 5 einen beispielhaften Verlauf des (abgetasteten) Beschleunigungswertes as1 über die Zeit t bei einem Frontalzusammenstoß des Kraftfahrzeuges 1 mit einem Hindernis. Fig. 6 zeigt einen beispielhaften Verlauf des Pseudogeschwindigkeitswertes v0S1 für $\tau_0$ = 24ms.

In der in Fig. 6 dargestellten beispielhaften Ausgestaltung beträgt $\tau_1$ 17 ms, $\tau_2$ 34 ms und $\tau_3$ 51 ms. In einer vorteilhaften Ausgestaltung kann $\tau_1$ 8 ms, $\tau_2$ 16 ms und $\tau_3$ 24 ms betragen.

Die Pseudogeschwindigkeitswerte v0S1, v1S1, v2S1, v3S1, v0S2 und v0S3 sind Beispiele für zeitliche Mittelwerte im Sinne der Erfindung.

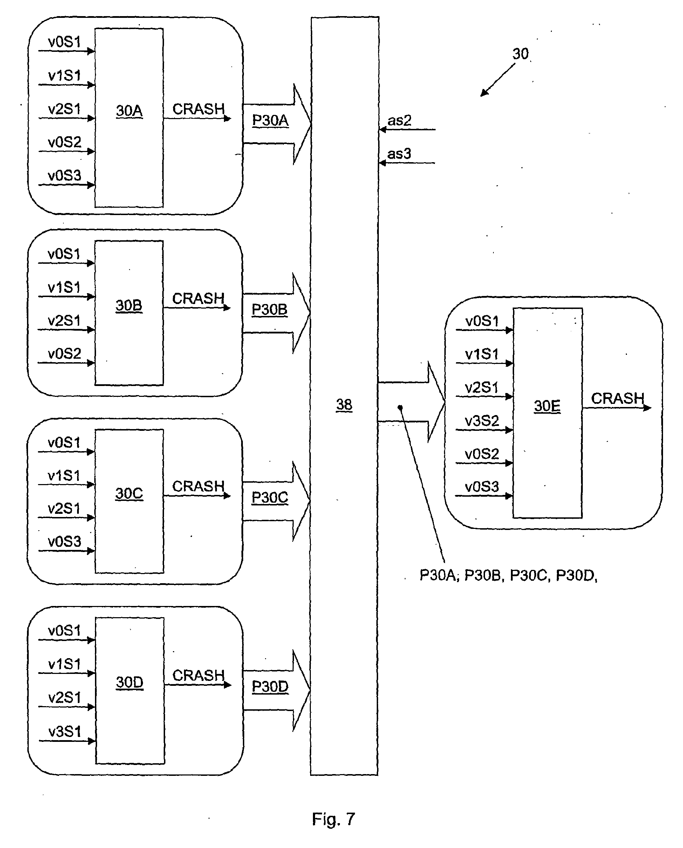

Das Auslösemodul 20 umfasst weiterhin eine in Fig. 7 detailliert dargestellte Auslöseerzeugung 30 zur Erzeugung des Zündvorschlags CRASH. Die Auslöseerzeugung 30 umfasst einen Auslösezusammenhang 30A zur Erzeugung des Zündvorschlags CRASH in Abhängigkeit der Pseudogeschwindigkeitswerte v0S1, v1S1, v2S1, v0S2 und v0S3, einen Auslösezusammenhang 30B zur Erzeugung des Zündvorschlags CRASH in Abhängigkeit der Pseudogeschwindigkeitswerte v0S1, v1S1, v2S1 und v0S2, einen Auslösezusammenhang 30C zur Erzeugung des Zündvorschlags CRASH in Abhängigkeit der Pseudogeschwindigkeitswerte v0S1, v1S1, v2S1 und v0S3 und einen Auslösezusammenhang 30D zur Erzeugung des Zündvorschlags CRASH in Abhängigkeit der Pseudogeschwindigkeitswerte v0S1, v1S1, v2S1 und v3S1.

Die Auslöseerzeugung 30 umfasst zudem ein Auswahlmodul 38 zur Auswahl eines Auslösezusammenhanges 30A, 30B, 30C oder 30D zur Verwendung als aktueller Auslösezusammenhang 30E zur Erzeugung des aktuellen Zündvorschlags CRASH in Abhängigkeit der Pseudogeschwindigkeitswerte v0S1, v1S1, v2S1, v3S1, v0S2 und v0S3. Erkennt das Auswahlmodul 38, dass der Crashsensor S2 Beschleunigungswerte aS2 (und damit der A/D-Wandler 25 abgetastete Beschleunigungswerte as2) und der Crashsensor S3 Beschleunigungswerte aS3 (und damit der A/D-Wandler 26 abgetastete Beschleunigungswerte as3) liefert, so wählt das Auswahlmodul 38 den Auslösezusammenhang 30A zur Verwendung als aktueller Auslösezusammenhang 30E zur Erzeugung des aktuellen Zündvorschlags CRASH aus.

Erkennt das Auswahlmodul 38, dass der Crashsensor S2 Beschleunigungswerte aS2 (und damit der A/D-Wandler 25 abgetastete Beschleunigungswerte as2), der Crashsensor S3 jedoch keine Beschleunigungswerte aS3 (und damit der A/D Wandler 26 keine abgetasteten Beschleunigungswerte as3) liefert, so wählt das Auswahlmodul 38 den Auslösezusammenhang 30B zur Verwendung als aktueller Auslösezusammenhang 30E zur Erzeugung des aktuellen Zündvorschlags CRASH aus.

Erkennt das Auswahlmodul 38, dass der Crashsensor S3 Beschleunigungswerte aS3 (und damit der A/D-Wandler 26 abgetastete Beschleunigungswerte as3), der Crashsensor S2 jedoch keine Beschleunigungswerte aS2 (und damit der A/D-Wandler 25 keine abgetasteten Beschleunigungswerte as2) liefert, so wählt das Auswahlmodul 38 den Auslösezusammenhang 30C zur Verwendung als aktueller Auslösezusammenhang 30E zur Erzeugung des aktuellen Zündvorschlags CRASH aus.

Erkennt das Auswahlmodul 38, dass der Crashsensor S2 keine Beschleunigungswerte aS2 (und damit der A/D-Wandler 25 keine abgetasteten Beschleunigungswerte as2) und dass der Crashsensor S3 keine Beschleunigungswerte as3 (und damit der A/D-Wandler 26 keine abgetasteten Beschleunigungswerte as3) liefert, so wählt das Auswahlmodul 38 den Auslösezusammenhang 30D zur Verwendung als aktueller Auslösezusammenhang 30E zur Erzeugung des aktuellen Zündvorschlags CRASH aus.

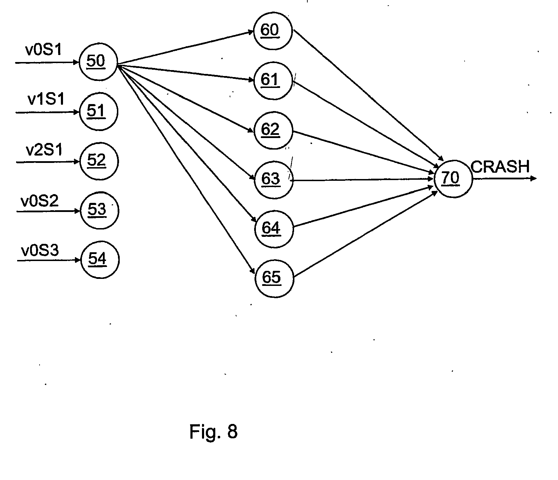

Die wahlweise Ausgestaltung des Auslösezusammenhanges 30E als Auslösezusammenhang 30A, 30B, 30C oder 30D erfolgt in beispielhafter Ausgestaltung durch wahlweise Übergabe von Parametern P30A zur Definition des Auslösezusammenhanges 30A, Parametern P30B zur Definition des Auslösezusammenhanges 30B, Parametern P30C zur Definition des Auslösezusammenhanges 30C bzw. Parametern P30D zur Definition des Auslösezusammenhanges 30D an den Auslösezusammenhang 30E. Die Auslösezusammenhänge 30A, 30B, 30C und 30D (oder ein Teil der Auslösezusammenhänge 30A, 30B, 30C und 30D) können z.B. als neuronales Netz ausgebildet sein, wie es in Fig. 8 in beispielhafter Ausgestaltung zur Implementierung des Auslösezusammenhanges 30A dargestellt ist. Das in Fig. 8 dargestellte neuronale Netz umfasst fünf Eingangsknoten 50, 51, 52, 53, 54, sechs verdeckte Knoten 60, 61, 62, 63, 64, 65 und einen Ausgangsknoten 70, wobei jeder Eingangsknoten 50, 51, 52, 53, 54 mit jedem verdeckten Knoten 60, 61, 62, 63, 64, 65 und jeder verdeckte Knoten 60, 61, 62, 63, 64, 65 mit dem Ausgangsknoten 70 verbunden ist. In Fig. 8 sind jedoch aus Gründen der Übersichtlichkeit nicht alle Verbindungen zwischen den Eingangsknoten 50, 51, 52, 53, 54 und den verdeckten Knoten 60, 61, 62, 63, 64, 65 dargestellt.

Eingangsgröße in den Eingangsknoten 50 ist der Pseudogeschwindigkeitswert v0S1, Eingangsgröße in den Eingangsknoten 51 ist der Pseudogeschwindigkeitswert v1S1, Eingangsgröße in den Eingangsknoten 52 ist der Pseudogeschwindigkeitswert v2S1, Eingangsgröße in den Eingangsknoten 53 ist der Pseudogeschwindigkeitswert v0S2, und Eingangsgröße in den Eingangsknoten 54 ist der Pseudogeschwindigkeitswert v0S3. Ausgangsgröße aus dem Ausgangskoten 70 ist der Zündvorschlag CRASH.

Die Parameter P30A, P30B, P30C bzw. P30D können z.B. die Verstärkungen der Knoten 50, 51, 52, 53, 54, 60, 61, 62, 63, 64, 65 und 70 des neuronalen Netzes sein.

Einzelheiten zu neuronalen Netzen können der US 5 583 771, der US 5 684 701 sowie den in der US 5 684 701 zitierten Dokumenten "Techniques And Application Of Neural Networks", Taylor, M. und Lisboa, Ellis Horwood, West Sussex, England, 1993, "Naturally Intelligent Systems", Caudill, M. und Butler, G., MIT Press, Cambridge, 1990 und "Digital Neural Networks", Kung, S. Y., PTR Prentice Hall, Eaglewood Cliffs, NJ., 1993 entnommen werden.

## Tabelle 1

```
/* Evaluation function */
int evaluate_Action(double *x)
{
        int CRASH;

        if (vOS3 < δ_vOS3 ) {
            if (vOS2 < δ_vOS2 ) {
                if (v2S1 < δ_v2S1 ) {
                    if (vOS1 < δ_vOS1 ) {
                        CRASH = 0;
                    } else {
                        if (vOS3 < δ_vOS3,2 ) {
                            CRASH = 0;
                        } else {
                            if (vOS1 < δ_vOS1,2 ) {
                                if (v1S1 < δ_v1S1 ) {
                                    CRASH = 1;
                                } else {
                                    CRASH = 0;
                                }
                            } else {
                                CRASH = 1;
                            }
                        }
                    }
                } else {
                    if (vOS2 < δ_vOS2,2 ) {
                        CRASH = 0;
                    } else {
                        if (vOS3 < δ_vOS3,3 ) {
                            CRASH = 0;
                        } else {
                            CRASH = 1;
                        }
                    }
                }
            } else {
                CRASH = 1;
            }
        } else {
            CRASH = 1;
        }
        return (CRASH);
}
```

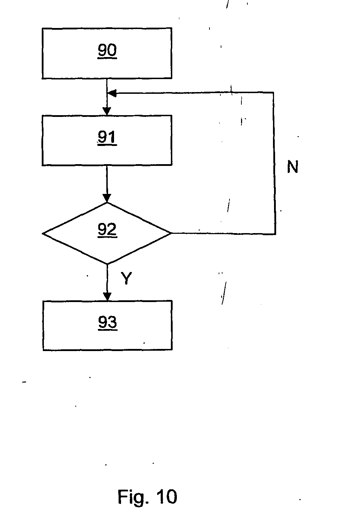

Die Auslösezusammenhänge 30A, 30B, 30C und 30D (oder ein Teil der Auslösezusammenhänge 30A, 30B, 30C und 30D) können alternativ z.B. auch als Abfolge von Vergleichen mit Grenzwerten ausgestaltet werden. Tabelle 1 zeigt eine solche Abfolge von Vergleichen mit Grenzwerten am Beispiel einer möglichen Implementierung des Auslösezusammenhanges 30A, wobei der in Tabelle 1 dargestellte Code durch ein unter Bezugnahme auf Fig. 10 erläutertes Verfahren automatisch erzeugt worden ist. Für den in Tabelle 1 dargestellte Code beträgt $\tau_1$ 4 ms, $\tau_2$ 8 ms und $\tau_0$ 24 ms. Die Parameter P30A, P30B, P30C bzw. P30D können z.B. auch der in Tabelle 1 dargestellte Code sein.

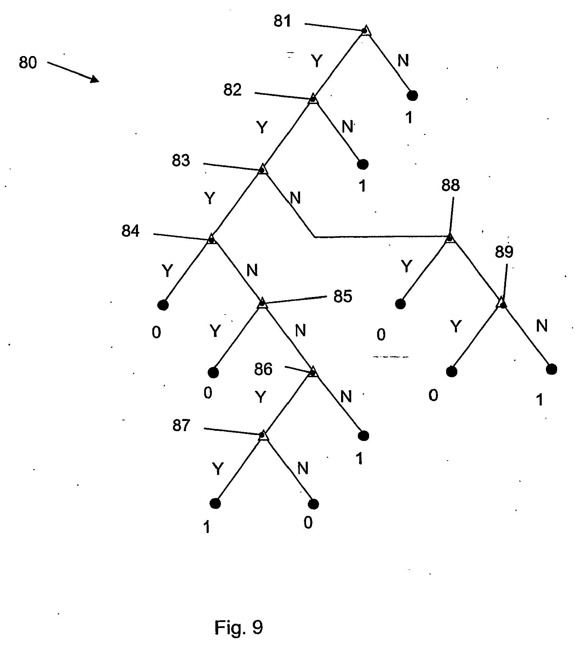

Fig. 9 zeigt den Code gemäß Tabelle 1 in einer Darstellung als Entscheidungsbaum 80. Dabei bezeichnet Bezugszeichen 81 die Abfrage, ob v0S3 kleiner ist als ein Grenzwert $\delta_{v0S3}$. Bezugszeichen 82 bezeichnet die Abfrage, ob v0S2 kleiner ist als ein Grenzwert $\delta_{v0S2}$. Bezugszeichen 83 bezeichnet die Abfrage, ob v2S1 kleiner ist als ein Grenzwert $\delta_{v2S1}$. Bezugszeichen 84 bezeichnet die Abfrage, ob v0S1 kleiner ist als ein Grenzwert $\delta_{v0S1}$. Bezugszeichen 85 bezeichnet die Abfrage, ob v0S3 kleiner ist als ein Grenzwert $\delta_{v0S3,2}$. Bezugszeichen 86 bezeichnet die Abfrage, ob v0S1 kleiner ist als ein Grenzwert $\delta_{v0S1,2}$. Bezugszeichen 87 bezeichnet die Abfrage, ob v1S1 kleiner ist als ein Grenzwert $\delta_{v1S1}$. Bezugszeichen 88 bezeichnet die Abfrage, ob v0S2 kleiner ist als ein Grenzwert $\delta_{v0S2,2}$. Bezugszeichen 89 bezeichnet die Abfrage, ob v0S3 kleiner ist als ein Grenzwert $\delta_{v0S3,3}$.

Fig. 10 zeigt ein Verfahren zum Herstellen des Kraftfahrzeuges 1. Dazu wird zunächst in einem Schritt 90 ein Test-Prototyp des Kraftfahrzeuges 1 erstellt, in den den Crashsensoren S1, S2, S3 entsprechende Crashsensoren zum Messen der Bewegungsgröße des Kraftfahrzeuges 1 eingebaut werden. Der Test-Prototyp des Kraftfahrzeuges 1 wird einem Crashtest unterzogen, wobei die Ausgangssignale der den Crashsensoren S1, S2, S3 entsprechenden Crashsensoren gemessen werden. Aus diesen Ausgangssignalen bzw. den Ausgangssignalen weiterer Crashtests wird eine Datenbasis aufgebaut. In dieser Datenbasis sind aus den vorgenannten Ausgangssignalen der den Crashsensoren S1, S2, S3 entsprechenden Crashsensoren gemäß einem in Fig. 4, Fig. 16, Fig. 17 bzw. Fig. 18 beschriebenen Verfahren erzeugte Pseudogeschwindigkeitswerte v0S1, v1S1, v2S1, v3S1, v0S2, v0S3 zusammen mit einer Auslöseinformation CRASHTRUE abgespeichert, die einen Soll-Zündzeitpunkt bzw. einen Soll-Auslösezeitpunkt angibt. Die Auslöseinformation CRASHTRUE kann z.B. einen Soll-Zündzeitpunkt des Airbags 15 angeben.

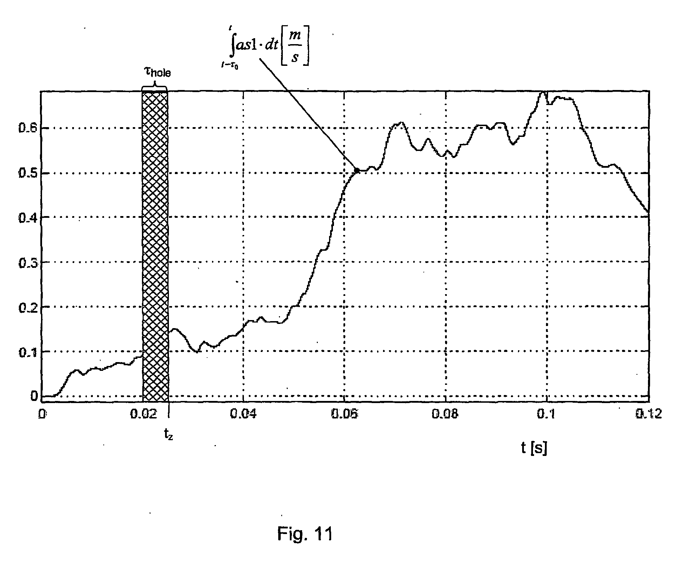

Dem Schritt 90 folgt ein Schritt 91, in dem die Auslösezusammenhänge 30A, 30B, 30C und 30D auf der Grundlage der in der Datenbasis abgespeicherten Daten erzeugt werden. Dabei bleiben jedoch die Pseudogeschwindigkeitswerte v0S1, v1S1, v2S1, v3S1, v0S2, v0S3 in einem Trainingsunterdrückungs-Zeitintervall um den Soll-Auslösezeitpunkt des Airbags 15 bzw. des Gurtstraffers 16 herum, in einem Trainingsunterdrückungs-Zeitintervall nach dem Soll-Auslösezeitpunkt des Airbags 15 bzw. des Gurtstraffers 16 oder vorteilhafterweise - wie im folgenden unter Bezugnahme auf Fig. 11, Fig. 12, Fig. 13, Fig. 14 und Fig. 15 erläutert - in einem Trainingsunterdrückungs-Zeitintervall vor dem Soll-Auslösezeitpunkt des Airbags 15 bzw. des Gurtstraffers 16 bei der Erzeugung der Auslösezusammenhänge 30A, 30B, 30C und 30D unberücksichtigt.

Fig. 11 zeigt den Pseudogeschwindigkeitswert gemäß Fig. 6 mit einem entsprechenden Trainingsunterdrückungs-Zeitintervall $\tau_{hole}$, das vor einem mit $t_z$ bezeichneten Soll-Auslösezeitpunkt des Airbags 15 bzw. des Gurtstraffers 16 liegt. Der Soll-Auslösezeitpunkt $t_z$ ist dabei vorteilhafterweise der Zeitpunkt, bis zu dem der Airbag 15 bzw. der Gurtstraffer 16 spätestens ausgelöst werden soll. Das Trainingsunterdrückungs-Zeitintervall $\tau_{hole}$ ist zwischen 1 ms und 40 ms, insbesondere zwischen 2 ms und 10 ms, vorteilhafterweise in etwa 5 ms, lang. In dem vorliegenden Ausführungsbeispiel beträgt das Trainingsunterdrückungs-Zeitintervall $\tau_{hole}$ 5 ms.

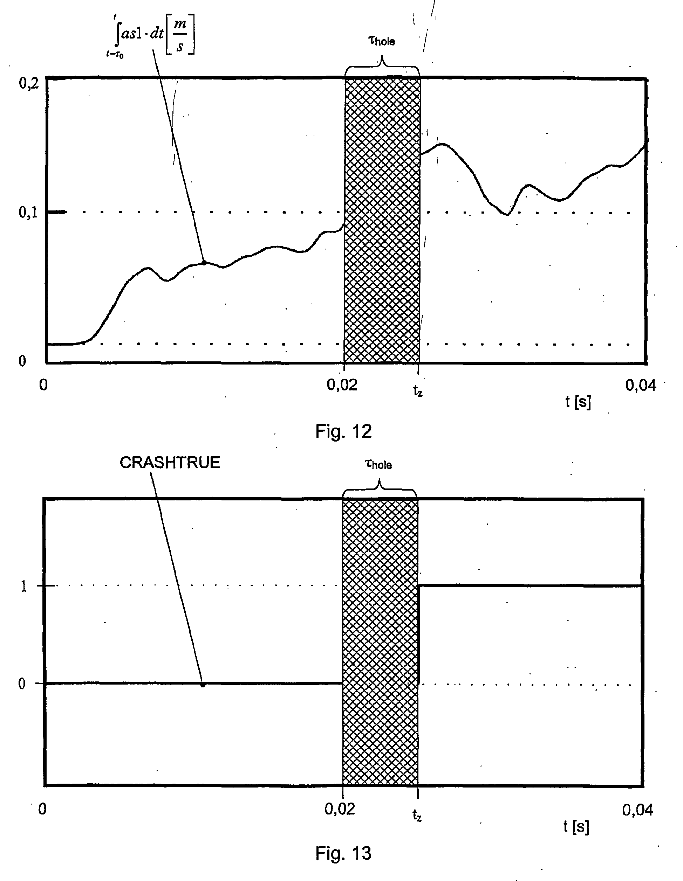

Fig. 12 zeigt einen Ausschnitt aus Fig. 11 für den Bereich zwischen 0 ms und 40 ms. Fig. 13 zeigt die zugeordnete Auslöseinformation CRASHTRUE. Die Auslöseinformation CRASHTRUE ist vor dem Soll-Auslösezeitpunkt $t_z$ gleich 0 und nach dem Soll-Auslösezeitpunkt $t_z$ gleich 1, bleibt jedoch ebenso wie der Pseüdogeschwindigkeitswert gemäß Fig. 12 in dem Trainingsunterdrückungs-Zeitintervall $\tau_{hole}$ vor dem Soll-Auslösezeitpunkt $t_z$ für die Erzeugung der Auslösezusammenhänge 30A, 30B, 30C und 30D unberücksichtigt. Dies kann z.B. dadurch erfolgen, das die Pseudogeschwindigkeitswerte und die Auslöseinformation CRASHTRUE in dem Trainingsunterdrückungs-Zeitintervall $\tau_{hole}$ aus den Daten entfernt werden.

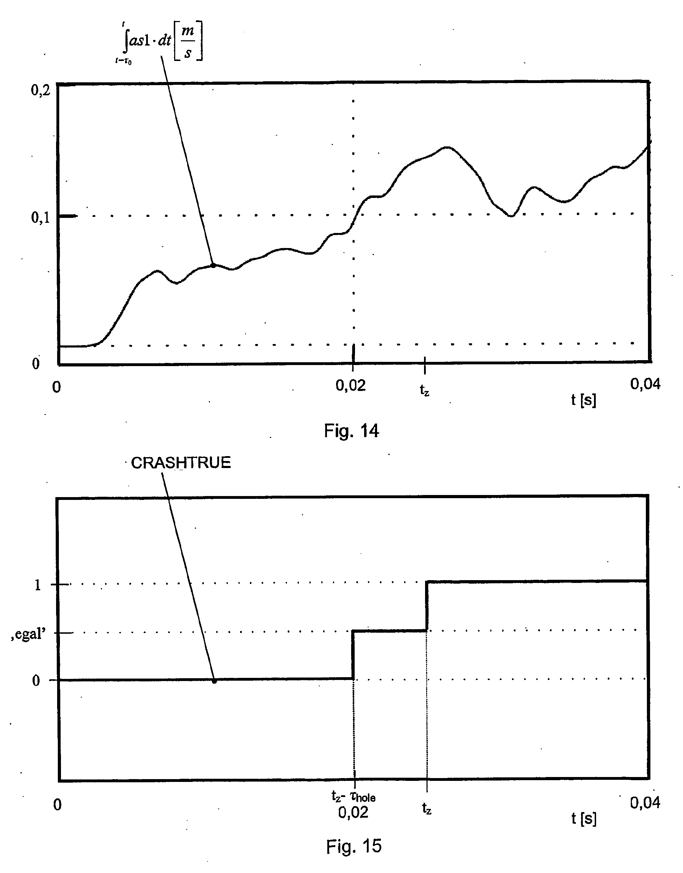

Fig. 14 und Fig. 15 zeigen ein dazu alternatives Vorgehen, das ebenfalls Pseudogeschwindigkeitswerte und die Auslöseinformation CRASHTRUE in dem Trainingsunterdrückungs-Zeitintervall $\tau_{hole}$ bei der Erzeugung der Auslösezusammenhänge 30A, 30B, 30C und 30D unberücksichtigt lässt. Dabei werden die Pseudogeschwindigkeitswerte zwar auch in dem Trainingsunterdrückungs-Zeitintervall $\tau_{hole}$ vor dem Soll-Auslösezeitpunkt $t_z$ für die Erzeugung der Auslösezusammenhänge 30A, 30B, 30C und 30D verwendet, die Auslöseinformation CRASHTRUE wird jedoch in dem Trainingsunterdrückungs-Zeitintervall $\tau_{hole}$ vor dem Soll-Auslösezeitpunkt $t_z$ um eine Variable ,egal' ergänzt, die angibt, dass sowohl eine während eines Trainings von den Auslösezusammenhängen 30A, 30B, 30C und 30D ausgegebene 0 als auch eine ausgegebene 1 für den Zündvorschlag CRASH richtig ist. Das heißt, egal ob die Auslösezusammenhänge 30A, 30B, 30C und 30D während des Trainings bzw. Lernens innerhalb des Trainingsunterdrückungs-Zeitintervalls $\tau_{hole}$ als Zündvorschlag CRASH 0 oder 1 ausgeben, wird angenommen, dass die Lösung richtig, also der Zündvorschlag CRASH gleich der Auslöseinformation CRASHTRUE ist.

Mittels der gemäß dem unter Bezugnahme auf Fig. 12, Fig. 13, Fig. 14 und Fig. 15 beschriebenen Vorgehen veränderten Daten der Datenbasis werden die Auslösezusammenhänge 30A, 30B, 30C und 30D anschließend automatisch mit dem Ziel erzeugt, dass für die verwendeten Daten der Zündvorschlag CRASH gleich der Auslöseinformation CRASHTRUE ist. Zur automatischen Erzeugung der Auslösezusammenhänge 30A, 30B, 30C und 30D in einer Ausgestaltung als in Fig. 8 dargestelltes neuronales Netz können dafür herkömmliche Tools zur Erzeugung neuronaler Netze verwendet werden.

Zur automatischen Erzeugung-der Auslösezusammenhänge 30A, 30B, 30C und 30D in einer Ausgestaltung als in Tabelle 1 dargestellte Abfolge von Vergleichen bzw. als in Fig. 9 dargestellten Entscheidungsbaum 80 kann z.B. die Routine "treefit" aus der "Statistics Toolbox" des Programms "MATLAB 7" von Mathworks verwendet werden. Dieses Programm kann unter der Internetadresse www.mathworks.com/company/aboutus/contact_us/contact_sales.html erworben werden. Einzelheiten zur Routine "treefit" sind unter der Internetadresse www.mathworks.com/access/helpdesk/help/toolbox/stats/treefit.html offenbart.

Der Auslösezusammenhang gemäß Fig. 9 bzw. Tabelle 1 lässt den Pseudogeschwindigkeitswert v3S1 unberücksichtigt. Dieser ist im Lernverfahren berücksichtigt, jedoch bei der Erzeugung des Codes gemäß Tabelle 1 verworfen worden.

Dem Schritt 91 folgt eine Abfrage 92, ob die so erzeugten Auslösezusammenhänge 30A, 30B, 30C und 30D in Ordnung sind. Dazu werden die Auslösezusammenhänge 30A, 30B, 30C und 30D mit den nicht im Schritt 91 verwendeten Einträgen der Datenbasis getestet. Sind die Auslösezusammenhänge 30A; 30B, 30C und 30D in Ordnung, so folgt der Abfrage 92 ein Schritt 93. Andernfalls wird der Schritt 91 unter veränderten Bedingungen wiederholt.

In dem Schritt 93 werden die Auslösezusammenhänge 30A, 30B, 30C und 30D in dem Steuergerät 2 implementiert. Das Steuergerät 2 wird anschließend zusammen mit den Crashsensoren S1, S2, S3 und entsprechenden Insassenschutzeinrichtungen, wie dem Airbag 15 bzw. dem Gurtstraffer 16, in dem Kraftfahrzeug 1 verbaut.

Obwohl in Verbindung mit einer binären Auslöseinformation CRASHTRUE und einem binären Zündvorschlag CRASH erläutert, ist die Erfindung in gleicher Weise auch für komplexe Auslöseinformationen und Zündvorschläge anwendbar. Dies gilt sowohl für das unter Bezugnahme auf Fig. 12 und Fig. 13 beschriebene Vorgehen als auch für das unter Bezugnahme auf Fig. 14 und Fig. 15 beschriebene Vorgehen.

In dem vorgestellten bevorzugten Ausführungsbeispiel werden die Pseudogeschwindigkeitswerte v0S1, v1S1, v2S1, v3S1, v0S2, v0S3, also die zeitlichen Mittelwerte der (gemessenen) Beschleunigungswerte aS1, aS2, aS3, als Eingangs- und Trainingsgrößen der Auslösezusammenhänge 30A, 30B, 30C und 30D verwendet. Die (gemessenen) Beschleunigungswerte aS1, aS2, aS3 bzw. die abgetasteten Beschleunigungswerte as1, as2, as3 können in gleicher Weise wie die Pseudogeschwindigkeitswerte vOS1, v1S1, v2S1, v3S1, v0S2, v0S3 als unmittelbare und nicht nur mittelbare Eingangs- und Trainingsgrößen der Auslösezusammenhänge 30A, 30B, 30C und 30D verwendet werden. Dies gilt ebenfalls sowohl für das unter Bezugnahme auf Fig. 12 und Fig. 13 beschriebene Vorgehen als auch für das unter Bezugnahme auf Fig. 14 und Fig. 15 beschriebene Vorgehen. In entsprechender Abwandlung des unter Bezugnahme auf Fig. 12 und Fig. 13 beschriebenen Vorgehens werden dabei die (gemessenen) Beschleunigungswerte aS1, aS2, aS3 bzw. die abgetasteten Beschleunigungswerte as1, as2, as3 in dem Bereich des Trainingsunterdrückungs-Zeitintervalls $\tau_{hole}$ aus den Trainingsdaten der Auslösezusammenhänge 30A, 30B, 30C und 30D entfernt.

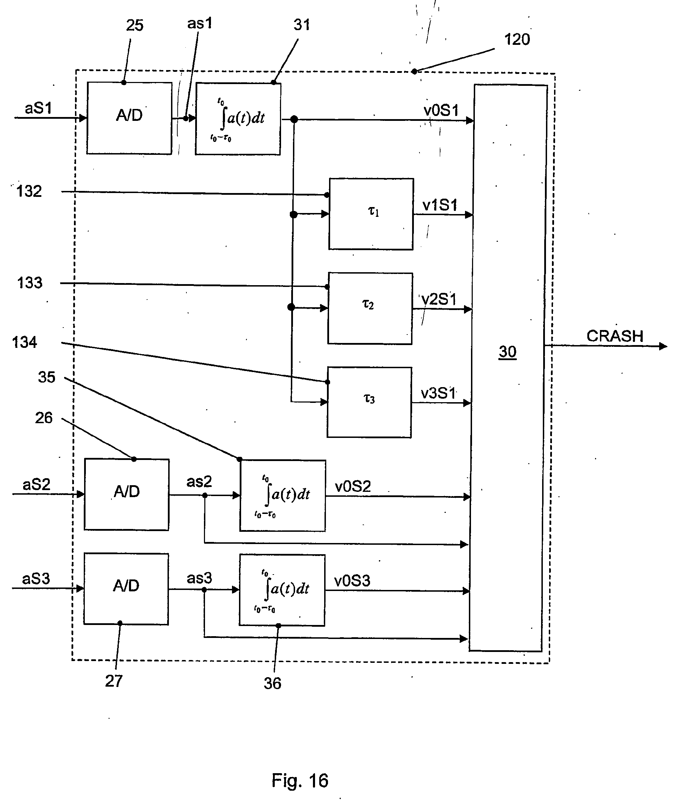

Fig. 16 zeigt ein zum Auslösemodul 20 alternatives Auslösemodul 120 in einer beispielhaften Ausgestaltung. Dabei sind die Integratoren 32, 33 und 34 durch Totzeitglieder 132, 133 und 134 ersetzt, die derart angeordnet sind, dass sich der Pseudogeschwindigkeitswert v1 S1 als um die Zeit $\tau_1$ verzögerter Pseudogeschwindigkeitswert v0S1, der Pseudogeschwindigkeitswert v2S1 als um die Zeit $\tau_2$ verzögerter Pseudogeschwindigkeitswert v0S1 und der Pseudogeschwindigkeitswert v3S1 als um die Zeit $\tau_3$ verzögerter Pseudogeschwindigkeitswert v0S1 ergibt.

Eine mögliche (einfache) Implementierung des Integrators 31 (und entsprechend angepasst für die Integratoren 32, 33 und 34) ist z.B.

$$vS1(i) = c \cdot \Delta t \sum_{j=i-\frac{\tau_0}{\Delta t}}^{i} as1(j)$$

wobei i ein Laufindex zur Angabe des aktuellen Zeitpunktes $t_0$ und eine Konstante ist. Die Pseudogeschwindigkeitswerte v0S1, v1S1, v2S1 und v3S1 ergeben sich in diesem Fall z.B. gemäß folgender Zusammenhänge:

$$v0S1 = vS1(i)$$

$$v1S1 = vS1(i - \frac{\tau_1}{\Delta t})$$

$$v2S1 = vS1(i - \frac{\tau_2}{\Delta t})$$

und

$$v3S1 = vS1(i - \frac{\tau_3}{\Delta t})$$

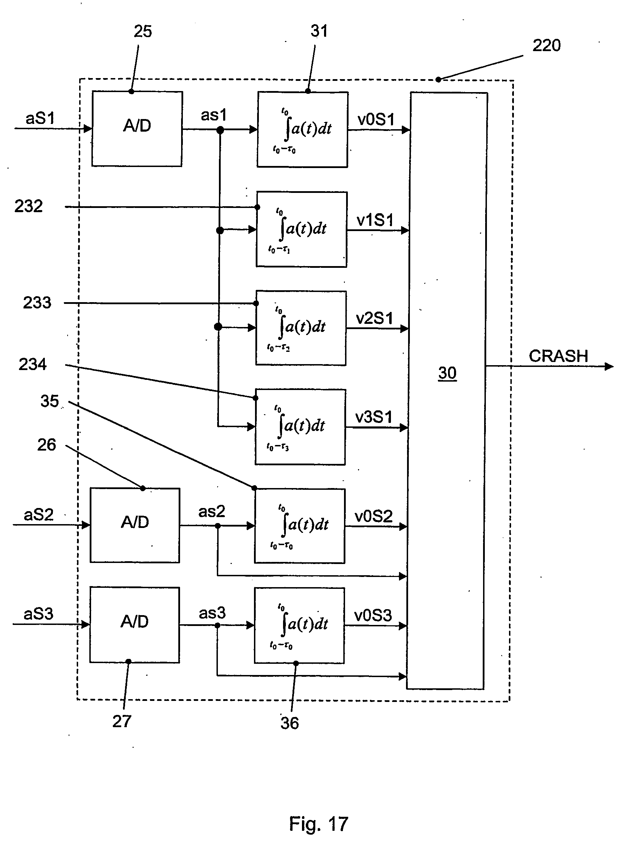

Fig. 17 zeigt ein zum Auslösemodul 20 alternatives Auslösemodul 220 in einer beispielhaften Ausgestaltung. Dabei sind die Integratoren 32, 33 und 34 durch Integratoren 232, 233 und 234 ersetzt. Dabei wird mittels des Integrators 232 der Pseudogeschwindigkeitswert v1S1 gemäß

$$v1S1 = \int_{t_0-\tau_1}^{t_0} as1 \cdot dt$$

ermittelt.

Mittels des Integrators 233 wird ein Pseudogeschwindigkeitswert v2S1 zu einem Zeitpunkt $t_0$ gemäß

$$v2S1 = \int_{t_0-\tau_2}^{t_0} as1 \cdot dt$$

ermittelt.

Mittels des Integrators 234 wird ein Pseudogeschwindigkeitswert v3S1 zu einem Zeitpunkt $t_0$ gemäß

$$v3S1 = \int_{t_0-\tau_3}^{t_0} as1 \cdot dt$$

ermittelt.

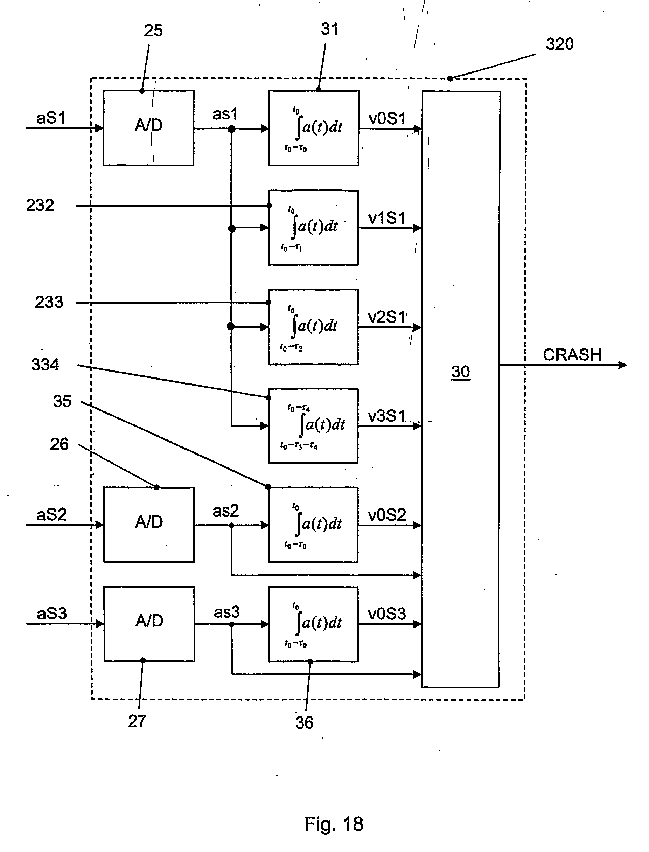

Bei dem Auslösemodul 20 gemäß Fig. 4 und dem Auslösemodul 120 gemäß Fig. 16 unterscheiden sich die Zeitintervalle in ihrer Position. Bei dem Auslösemodul 220 gemäß Fig. 17 unterscheiden sich die Zeitintervalle dagegen in ihrer Länge. Es kann auch vorgesehen werden, dass sich Zeitintervalle in ihrer Länge und in ihrer Position unterscheiden. Ein entsprechendes Ausführungsbeispiel zeigt Fig. 18. Fig. 18 zeigt ein zum Auslösemodul 220 alternatives Auslösemodul 320 in einer beispielhaften Ausgestaltung. Dabei ist der Integrator 234 durch einen Integrator 334 ersetzt, mittels dessen ein Pseudogeschwindigkeitswert v3S1 zu einem Zeitpunkt $t_0-\tau_4$ gemäß

$$v3S1 = \int_{t_0-\tau_3-\tau_4}^{t_0-\tau_4} as1 \cdot dt$$

ermittelt wird.

Die Erfindung führt zu einer besonders robusten Ansteuerung von Airbags und Gurtstraffern.

Obwohl in den Aufführungsbeispielen an Hand von Airbags und Gurtstraffern für einen Frontalzusammenstoß erläutert, soll die Erfindung selbstverständlich nicht auf diesen Fall beschränkt sein. Die Erfindung ist auch für Seitenairbags und andere Insassenschuizsysteme anwendbar. In einer Implementierung für Seitenairbags können die Crashsensoren S2 und S3 z.B. in der B-Säule angeordnet werden. Es kann vorgesehen werden, dass auch für Crashsensor S2 und/oder Crashsensor S3 zumindest ein Pseudogeschwindigkeitswert über zumindest einem weiteren Zeitintervall gebildet wird.

Das Steuergerät 2 kann auch ein verteiltes System sein. Ein Steuergerät im Sinne der Erfindung muss nicht in einem einzigen Gehäuse untergebracht sein. Ein Steuergerät im Sinne der Erfindung kann auch ein einzelner Chip oder eine Platine sein.

Soweit Entscheidungsbäume im Zusammenhang mit der Erzeugung des Zündvorschlags CRASH genannt bzw. erwähnt sind, können diese auch durch Regression Trees, Association Tables, Rule Sets, Supervector Mashines oder andere Mashine-Learning-Verfahren ersetzt werden.

Anstelle der Bewegungsgrößen bzw. deren Mittelwerte können auch Differenzen von Bewegungsgrößen, Mittelwerte dieser Differenzen und/oder Differenzen von Mittelwerten verwendet werden. So kann z.B. vor den Integratoren 31, 32, 33, 34, 35, 36, 232, 233, 234 bzw. 334 in Fig. 4, Fig. 16, Fig. 17 und/oder Fig. 18 eine Differenzbildung vorgesehen werden, so dass anstelle der abgetasteten Beschleunigungswerte as1, as2, as3 Differenzwerte $\Delta$as1, $\Delta$as2, $\Delta$as3 Eingangsgrößen der Integratoren 31, 32, 33, 34, 35, 36, 232, 233, 234 bzw. 334 sind, wobei $\Delta$as1 gleich der Differenz as1-as2, $\Delta$as2 gleich der Differenz as1-as3 und $\Delta$as3 gleich der Differenz as2-as3 ist. Es kann zudem vorgesehen sein, dass der Differenzwert $\Delta$as1 in gleicher Weise verarbeitet wird wie der abgetastete Beschleunigungswert as1 in Fig. 4, Fig. 16, Fig. 17 und/oder Fig. 18, dass der Differenzwert $\Delta$as2 in gleicher Weise verarbeitet wird wie der abgetastete Beschleunigungswert as1 in Fig. 4, Fig. 16, Fig. 17 und/oder Fig. 18 und/oder dass der Differenzwert $\Delta$as3 in gleicher Weise verarbeitet wird wie der abgetastete Beschleunigungswert as2 in Fig. 4, Fig. 16, Fig. 17 und/oder Fig. 18. In diesem Fall sind die Anzahl der Integratoren und die Anzahl der Eingangsgrößen der Auslöseerzeugung 30 entsprechend anzupassen.

Differenzen können auch zeitliche Differenzen sein. So kann vorgesehen sein, anstelle der abgetasteten Beschleunigungswerte as1, as2, as3 Differenzwerte $\Delta$as1, $\Delta$as2, $\Delta$as3 als Eingangsgrößen der Integratoren 31, 32, 33, 34, 35, 36, 232, 233, 234 bzw. 334 zu verwenden, wobei $\Delta$as1(t) gleich der Differenz as1(t)-as1(t-$\tau$), $\Delta$as2 gleich der Differenz as2(t)-as2(t-$\tau$) oder der Differenz as2(t)-as3(t-$\tau$) und $\Delta$as3 gleich der Differenz as3(t)-as3(t-$\tau$) oder der Differenz as3(t)-as2(t-$\tau$) ist.

Entsprechend vorgenannten Ausführungen in Bezug auf eine Differenzbildung können Bewegungsgrößen im Sinne der Erfindung auch Differenzen von Bewegungsgrößen sein, wenn sie als Eingangsgrößen verwendet werden.

Analog kann mit den Pseudogeschwindigkeitswerten v0S1, v1S1, v2S1, v3S1, v0S2, v0S3 verfahren werden. Entsprechend können Mittelwerte von Bewegungsgrößen im Sinne der Erfindung auch Differenzen von Mittelwerten von Bewegungsgrößen bzw. Mittelwerte von Differenzen von Bewegungsgrößen sein, wenn sie als Eingangsgrößen verwendet werden.

**Bezugszeichenliste**

| | |
|---|---|
| 1 | Kraftfahrzeug |
| 2 | Steuergerät |
| 3 | Crashzone |
| 4 | Sicherheitszone |
| 5, 6 | Zuleitungen |
| 7, 8 | gepunktete Linie |
| 10 | Steuerungsmodul |
| 11 | Gurtsensor |
| 12 | Sitzbelegungssensor |
| 14 | Bedienelement |
| 15 | Airbag |
| 16 | Gurtstraffer |
| 20, 120, 220, 320 | Auslösemodul |
| 21 | Feuertabelle |
| 25, 26, 27 | A/D-Wandler |
| 30 | Auslöseerzeugung |
| 30A, 30B, 30C, 30D, 30E | Auslösezusammenhang |
| 31, 32, 33, 34, 35, 36, 232, 233, 234, 334 | Integrator |
| 38 | Auswahlmodul |
| 40 | Zeitintervall |
| 50, 51, 52, 53, 54 | Eingangsknoten |
| 60, 61, 62, 63, 64, 65 | verdeckter Knoten |
| 70 | Ausgangsknoten |
| 80 | Entscheidungsbaum |
| 81, 82, 83, 84, 85, 86, 87, 88, 89, 92 | Abfrage |
| 90, 91, 93 | Schritt |
| 132, 133, 134 | Totzeitglied |
| AIR, GURT | Zündsignal |
| aS1, aS2, aS3, as1, as2, as3 | Beschleunigungswert |

| CRASH | Zündvorschlag |
|---|---|
| CRASHTRUE | Auslöseinformation |
| EINAUS | Schaltsignal |
| MGURT | Gurtinformation |
| MSITZ | Sitzbelegungsinformation |
| P30A, P30B, P30C, P30D | Parameter |
| S1, S2, S3 | Crashsensor |
| t | Zeit |
| $t_0$ | aktueller Zeitpunkt |
| $t_z$ | Soll-Auslösezeitpunkt |
| v0S1, v1S1, v2S1, v3S1, v0S2, v0S3 | Pseudogeschwindigkeitswert |
| $\tau_0$ | Länge eines Zeitintervalls |
| $\tau_0$, $\tau_1$, $\tau_2$, $\tau_3$ | Länge eines Zeitintervalls oder Zeit(-verzögerung) |
| $\tau_{hole}$ | Trainingsunterdrückungs-Zeitintervall |

**Patentansprüche**

1. Kraftfahrzeug (1) mit zumindest einem in einer Sicherheitszone (4) des Kraftfahrzeuges (1) angeordneten ersten Crashsensor (S1) zum Messen einer Bewegungsgröße des Kraftfahrzeuges (1) und mit zumindest einem in einer Crashzone (3) des Kraftfahrzeuges (1) angeordneten zweiten Crashsensor (S2) zum Messen einer Bewegungsgröße (aS2) des Kraftfahrzeuges (1), wobei das Kraftfahrzeug (1) eine mittels eines Zündsignals (CRASH, AIR, GURT) steuerbare Insassenschutzeinrichtung (15, 16) und ein Steuergerät (2) zur Ermittlung des Zündsignals (CRASH, AIR, GURT) in Abhängigkeit der gemessenen Bewegungsgrößen (aS1, aS2) oder je eines zeitlichen Mittelwertes (v0S1, v0S2) der gemessenen Bewegungsgrößen (aS1, aS2) über zumindest ein erstes Zeitintervall ($[t_0-\tau_0,t_0]$) umfasst, und wobei das Steuergerät (2) zumindest einen ersten Auslösezusammenhang (30A) zur Ermittlung des Zündsignals (CRASH, AIR, GURT) in Abhängigkeit der gemessenen Bewegungsgrößen (aS1, aS2) oder je eines zeitlichen Mittelwertes (v0S1, v0S2) der gemessenen Bewegungsgrößen (aS1, aS2) über das zumindest erste Zeitintervall ($[t_0-\tau_0,t_0]$) umfasst, **dadurch gekennzeichnet, dass** das Steuergerät (2) zumindest einen zweiten Auslösezusammenhang (30D) zur Ermittlung des Zündsignals (CRASH, AIR, GURT) in Abhängigkeit der mittels des ersten Crashsensors (S1) gemessenen Bewegungsgröße (aS1) oder deren zeitlichen Mittelwertes (v0S1) über das zumindest erste Zeitintervall ($[t_0-\tau_0,t_0]$) nicht jedoch in Abhängigkeit der mittels des zweiten Crashsensors (S2) gemessenen Bewegungsgröße (aS2) oder deren zeitlichen Mittelwertes (v0S2) über das zumindest erste Zeitintervall ($[t_0-\tau_0,t_0]$) umfasst.

2. Kraftfahrzeug (1) nach Anspruch 1, **dadurch gekennzeichnet, dass** das Steuergerät (2) ein Auswahlmodul (38) zur Auswahl des ersten Auslösezusammenhanges (30A) oder des zweiten Auslösezusammenhanges (30D) zur aktuellen Ermittlung des Zündsignals (CRASH, AIR, GURT) umfasst.

3. Kraftfahrzeug (1) nach Anspruch 1 oder 2, **dadurch gekennzeichnet, dass** das Zündsignal (CRASH, AIR, GURT) zudem in Abhängigkeit eines zeitlichen Mittelwertes (v1S) der mittels des ersten Crashsensors (S1) gemessenen Bewegungsgröße (aS1) über ein zweites, von dem ersten Zeitintervall ($[t_0-\tau_0,t_0]$) verschiedenes, Zeitintervall ($[t_0-\tau_0-\tau_1,t_0-\tau_1]$) ermittelbar ist.

4. Kraftfahrzeug (1) nach Anspruch 1, 2 oder 3, **dadurch gekennzeichnet, dass** die Zeitintervalle ($[t_0-\tau_0,t_0]$, $[t_0-\tau_0-\tau_1, t_0-\tau_1]$) zwischen 1 ms und 200 ms lang sind.

5. Verfahren zum Betrieb eines Kraftfahrzeuges (1) mit zumindest einem in einer Sicherheitszone (4) des Kraftfahrzeuges (1) angeordneten ersten Crashsensor (S1) zum Messen einer Bewegungsgröße des Kraftfahrzeuges (1) und mit zumindest einem in einer Crashzone (3) des Kraftfahrzeuges (1) angeordneten zweiten Crashsensor (S2) zum Messen einer Bewegungsgröße (aS2) des Kraftfahrzeuges (1), wobei das Kraftfahrzeug (1) eine mittels eines Zündsignals (CRASH, AIR, GURT) steuerbare Insassenschutzeinrichtung (15, 16) und ein Steuergerät (2) zur Ermittlung des Zündsignals (CRASH, AIR, GURT) in Abhängigkeit der gemessenen Bewegungsgrößen (aS1, aS2) oder je eines zeitlichen Mittelwertes (v0S1, v0S2) der gemessenen Bewegungsgrößen (aS1, aS2) über zumindest ein erstes Zeitintervall ($[t_0-\tau_0,t_0]$) umfasst, **dadurch gekennzeichnet, dass** zwischen einem ersten Auslösezusammenhang (30A) zur Ermittlung des Zündsignals (CRASH, AIR, GURT) in Abhängigkeit der gemessenen Bewegungsgrößen (aS1, aS2) oder je eines zeitlichen Mittelwertes (vOS1, vOS2) der gemessenen Bewegungsgrößen (aS1, aS2) über das zumindest erste Zeitintervall ($[t_0-\tau_0,t_0]$) und zumindest einem zweiten Auslösezusammenhang (30D) zur Ermittlung des Zündsignals (CRASH, AIR, GURT) in Abhängigkeit der mittels des ersten Crashsensors (S1) gemessenen Bewegungsgröße (aS1) oder deren zeitlichen Mittelwertes (v0S1) über das zumindest erste Zeitintervall ($[t_0-\tau_0,t_0]$) nicht jedoch in Abhängigkeit der mittels des zweiten Crashsensors (S2) gemessenen Bewegungsgröße (aS2) oder deren zeitlichen Mittelwertes (v0S2) über das zumindest erste Zeitintervall ($[t_0-\tau_0,t_0]$) ausgewählt wird.

**Claims**

1. Motor vehicle (1) having at least one first crash sensor (S1), which is arranged in a safety zone (4) of the motor vehicle (1), for measuring a movement variable of the motor vehicle (1), and having at least one second crash sensor (S2), which is arranged in a crash zone (3) of the motor vehicle (1), for measuring a movement variable (aS2) of the motor vehicle (1), with the motor vehicle (1) comprising an occupant protection device (15, 16), which can be controlled by means of an ignition signal (CRASH, AIR, BELT), and a control unit (2) for determining the ignition signal (CRASH, AIR, BELT) as a function of the measured movement variables (aS1, aS2) or of in each case one temporal mean value (v0S1, v0S2) of the measured movement variables (aS1, aS2) over at least one first time interval ($[t_0-\tau_0,t_0]$), and with the control unit (2) comprising at least one first trigger relationship (30A) for determining the ignition signal (CRASH, AIR, BELT) as a function of the measured movement variables (aS1, aS2) or of in each case one temporal mean value (v0S1, v0S2) of the measured movement variables (aS1, aS2) over the at least first time interval ($[t_0-\tau_0,t_0]$), **characterized in that** the control unit (2) comprises at least one second trigger relationship (30D) for determining the ignition signal (CRASH, AIR, BELT) as a function of the movement variable (aS1) measured by means of the first crash sensor (S1) or the temporal mean value (v0S1) of said movement variable (aS1) over the at least first time interval ($[t_0-\tau_0,t_0]$), but not as a function of the movement variable (aS2) measured by means of the second crash sensor (S2) or the temporal mean value (vOS2) of said movement variable (aS2) over the at least first time interval ($[t_0-\tau_0,t_0]$).

2. Motor vehicle (1) according to Claim 1, **characterized in that** the control unit (2) comprises a selection module (38) for selecting the first trigger relationship (30A) or the second trigger relationship (30D) for the present determination of the ignition signal (CRASH, AIR, BELT).

3. Motor vehicle (1) according to Claim 1 or 2, **characterized in that** the ignition signal (CRASH, AIR, BELT) can also be determined as a function of a temporal mean value (v1S) of the movement variable (aS1) measured by means of the first crash sensor (S1) over a second time interval ($[t_0-\tau_0-\tau_1,t_0-\tau_1]$) which differs from the first time interval ($[t_0-\tau_0,t_0]$)

4. Motor vehicle (1) according to Claim 1, 2 or 3, **characterized in that** the time intervals ($[t_0-\tau_0,t_0],[t_0-\tau_0-\tau_1, t_0-\tau_1]$) are between 1 and 200 ms long.

5. Method for operating a motor vehicle (1) having at least one first crash sensor (S1), which is arranged in a safety zone (4) of the motor vehicle (1), for measuring a movement variable of the motor vehicle (1), and having at least one second crash sensor (S2), which is arranged in a crash zone (3) of the motor vehicle (1), for measuring a movement variable (aS2) of the motor vehicle (1), with the motor vehicle (1) comprising an occupant protection device (15, 16), which can be controlled by means of an ignition signal (CRASH, AIR, BELT), and a control unit (2) for determining the ignition signal (CRASH, AIR, BELT) as a function of the measured movement variables (aS1, aS2) or of in each case one temporal mean value (v0S1, v0S2) of the measured movement variables (aS1, aS2) over at least one first time interval ($[t_0-\tau_0,t_0]$), **characterized in that** a selection is made between a first trigger relationship (30A) for determining the ignition signal (CRASH, AIR, BELT) as a function of the measured movement variables (aS1, aS2) or of in each case one temporal mean value (v0S1, v0S2) of the measured movement variables (aS1, aS2) over the at least first time interval ($[t_0-\tau_0,t_0]$), and at least one second trigger relationship (30D) for determining the ignition signal (CRASH, AIR, BELT) as a function of the movement variable (aS1) measured by means of the first crash sensor (S1) or the temporal mean value (v0S1) of said movement variable (aS1) over the at least first time interval ($(t_0-\tau_0,t_0]$), but not as a function of the movement variable (aS2) measured by means of the second crash sensor (S2) or the temporal mean value (vOS2) of said movement variable (aS2) over the at least first time interval $[t_0-\tau_0, t_0]$).

**Revendications**

1. Véhicule automobile (1) comprenant au moins un premier détecteur de collision (S1) disposé dans une zone de sécurité (4) du véhicule automobile (1) pour mesurer une grandeur de déplacement du véhicule automobile (1) et comprenant au moins un deuxième détecteur de collision (S2) disposé dans une zone de collision (3) du véhicule automobile (1) pour mesurer une grandeur de déplacement (aS2) du véhicule automobile (1), le véhicule automobile (1) comprenant un dispositif de protection des passagers (15, 16) pouvant être commandé au moyen d'un signal d'amorçage (CRASH, AIR, CEINTURE) et un module de commande (2) pour déterminer le signal d'amorçage (CRASH, AIR, CEINTURE) en fonction des grandeurs de déplacement (aS1, aS2) mesurées ou à chaque fois une valeur moyenne dans le temps (vOS1, vOS2) des grandeurs de déplacement (aS1, aS2) mesurées pendant au moins un premier intervalle de temps ($[t_0-\tau_0, t_0]$), et le module de commande (2) comprenant au moins une première relation de déclenchement (30A) pour déterminer le signal d'amorçage (CRASH, AIR, CEINTURE) en fonction des grandeurs de déplacement (aS1, aS2) mesurées ou à chaque fois une valeur moyenne dans le temps (vOS1, vOS2) des grandeurs de déplacement (aS1, aS2) mesurées pendant l'au moins un premier intervalle de temps ($[t_0-\tau_0, t_0]$), **caractérisé en ce que** le module de commande (2) comprend au moins une deuxième relation de déclenchement (30D) pour déterminer le signal d'amorçage (CRASH, AIR, CEINTURE) en fonction de la grandeur de déplacement (aS1) mesurée au moyen du premier détecteur de collision (S1) ou de sa valeur moyenne dans le temps (vOS1) pendant l'au moins un premier intervalle de temps ($[t_0-\tau_0, t_0]$), mais pas en fonction de la grandeur de déplacement (aS2) mesurée au moyen du deuxième détecteur de collision (S2) ou de sa valeur moyenne dans le temps (vOS2) pendant l'au moins un premier intervalle de temps ($[t_0-\tau_0, t_0]$).

2. Véhicule automobile (1) selon la revendication 1, **caractérisé en ce que** le module de commande (2) comprend un module de sélection (38) pour sélectionner la première relation de déclenchement (30A) ou la deuxième relation de déclenchement (30D) en vue de la détermination actuelle du signal d'amorçage (CRASH, AIR, CEINTURE).

3. Véhicule automobile (1) selon la revendication 1 ou 2, **caractérisé en ce que** le signal d'amorçage (CRASH, AIR, CEINTURE) peut en plus être déterminé en fonction d'une valeur moyenne dans le temps (v1S) de la grandeur de déplacement (aS1) mesurée au moyen du premier détecteur de collision (S1) pendant un deuxième intervalle de temps ($[t_0-\tau_0-\tau_1, t_0-\tau_1]$) différent du premier intervalle de temps ($[t_0-\tau_0, t_0]$).

4. Véhicule automobile. (1) selon la revendication 1, 2 ou 3, **caractérisé en ce que** les intervalles de temps ($[t_0-\tau_0, t_0]$, $[t_0-\tau_0-\tau_1, t_0-\tau_1]$) sont compris entre 1 ms et 200 ms.

5. Procédé pour faire fonctionner un véhicule automobile (1) comprenant au moins un premier détecteur de collision (S1) disposé dans une zone de sécurité (4) du véhicule automobile (1) pour mesurer une grandeur de déplacement du véhicule automobile (1) et comprenant au moins un deuxième détecteur de collision (S2) disposé dans une zone de collision (3) du véhicule automobile (1) pour mesurer une grandeur de déplacement (aS2) du véhicule automobile (1), le véhicule automobile (1) comprenant un dispositif de protection des passagers (15, 16) pouvant être commandé au moyen d'un signal d'amorçage (CRASH, AIR, CEINTURE) et un module de commande (2) pour déterminer le signal d'amorçage (CRASH, AIR, CEINTURE) en fonction des grandeurs de déplacement (aS1, aS2) mesurées ou à chaque fois une valeur moyenne dans le temps (vOS1, vOS2) des grandeurs de déplacement (aS1, aS2) mesurées pendant au moins un premier intervalle de temps ($[t_0-\tau_0, t_0]$), **caractérisé en ce qu'**une sélection est faite entre une première relation de déclenchement (30A) pour déterminer le signal d'amorçage (CRASH, AIR, CEINTURE) en fonction des grandeurs de déplacement (aS1, aS2) mesurées ou à chaque fois une valeur moyenne dans le temps (vOS1, vOS2) des grandeurs de déplacement (aS1, aS2) mesurées pendant l'au moins un premier intervalle de temps ($[t_0-\tau_0, t_0]$) et au moins une deuxième relation de déclenchement (30D) pour déterminer le signal d'amorçage (CRASH, AIR, CEINTURE) en fonction de la grandeur de déplacement (aS1) mesurée au moyen du premier détecteur de collision (S1) ou de sa valeur moyenne dans le temps (vOS1) pendant l'au moins un premier intervalle de temps ($[t_0-\tau_0, t_0]$), mais pas en fonction de la grandeur de déplacement (aS2) mesurée au moyen du deuxième détecteur de collision (S2) ou de sa valeur moyenne dans le temps (vOS2) pendant l'au moins un premier intervalle de temps ($[t_0-\tau_0, t_0]$).

Fig. 1

Fig. 2

Fig. 3

Fig. 4

Fig. 5

$$\int_{t-\tau_0}^{t} as1 \cdot dt \left[\frac{m}{s}\right]$$

Fig. 6

Fig. 7

Fig. 8

Fig. 9

Fig. 10

Fig. 11

$$\int_{t-\tau_0}^{t} as1 \cdot dt \left[\frac{m}{s}\right]$$

$\tau_{hole}$

0,2

0,1

0

0          0,02        $t_z$          0,04

t [s]

Fig. 12

CRASHTRUE          $\tau_{hole}$

1

0

0          0,02        $t_z$          0,04

t [s]

Fig. 13

$$\int\limits_{t-\tau_0}^{t} as1 \cdot dt \left[\frac{m}{s}\right]$$

**Fig. 14**

CRASHTRUE

**Fig. 15**

Fig. 16

28

Fig. 17

Fig. 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5583771 A
- US 5684701 A
- US 6532508 B1
- DE 19854380 A1
- DE 10035505 A1
- DE 10040111 A1
- DE 10103661 C1
- US 20020147533 A1
- DE 10016142 A1